# FASCICULE DE BREVET EUROPEEN

(11) **EP 1 388 196 B1**
(45) Date de publication et mention de la délivrance du brevet: **30.01.2008**
(21) Numéro de dépôt: 02732877.2
(22) Date de dépôt: 17.05.2002
(51) Int. Cl.: H02K 7/116, H02K 7/14, A47J 43/08

(54) **MOTEUR ÉLECTRIQUE POUR APPAREIL ÉLECTROMÉNAGER DE PRÉPARATION CULINAIRE**
ELEKTROMOTOR FÜR KÜCHENMASCHINEN
ELECTRIC MOTOR FOR FOOD PROCESSING ELECTRICAL HOUSEHOLD APPLIANCE

(30) Priorité: 18.05.2001 FR 0106605
(43) Date de publication de la demande: 11.02.2004
(73) Titulaire: SEB S.A., 69130 Ecully (FR)
(72) Inventeur: GARRIGUES, Patrick, F-65260 Pierrefitte-Nestalas (FR)
(74) Mandataire: Kiehl, Hubert
(86) Numéro de dépôt international: PCT/FR2002/001687
(87) Numéro de publication internationale: WO 2002/095900

(56) Documents cités:
- EP-A- 0 491 424
- DE-A- 1 563 051
- DE-A- 4 302 042
- DE-A- 4 412 898
- DE-U- 9 421 107
- US-A- 4 369 384
- US-A- 6 132 186

## Description

La présente invention se rapporte au domaine technique général des appareils électroménagers de préparation culinaire comportant dans un boîtier un moteur prévu pour entraîner au moins un outil de travail rotatif.

Les moteurs utilisés dans de tels appareils sont généralement du type universel ou du type asynchrone. L'un ou l'autre de ces types de moteurs présente l'inconvénient d'un encombrement axial important, dû notamment à la hauteur des empilements de tôles du stator selon l'axe de rotation du rotor.

Le document EP 0 491 424 propose d'utiliser un moteur à aimants permanents présentant un rotor de type cloche dans un appareil du type précité comportant un socle disposé sous un récipient de travail. Un tel moteur présente une hauteur sur l'axe très réduite, de l'ordre du dixième du diamètre. Ce moteur plat peut donc être disposé dans le socle sous le récipient de travail. Toutefois, un diamètre important est nécessaire pour obtenir un moteur suffisamment puissant. Le diamètre du rotor proposé est de l'ordre du diamètre du récipient de travail.

L'objet de la présente invention est de proposer une motorisation compacte et suffisamment puissante pour un appareil électroménager de préparation culinaire.

Un autre objet de la présente invention est de proposer une motorisation du type précité, qui permette de travailler à couple élevé à basse vitesse avec une bonne endurance.

Un autre objet de la présente invention est de proposer une motorisation du type précité, dont la construction soit simple.

Un autre objet de la présente invention est de proposer une motorisation du type précité, dont le fonctionnement soit silencieux.

Un autre objet de la présente invention est de proposer une motorisation du type précité, qui permette de travailler sur une gamme étendue de vitesses.

Cet objet est atteint avec un moteur électrique pour appareil électroménager de préparation culinaire selon la revendication 1.

L'utilisation d'un réducteur permet, par rapport à l'appareil du document EP 0 491 424, de réduire le diamètre du moteur tout en conservant un couple suffisant au niveau de l'entraînement en sortie du réducteur. Le diamètre plus réduit du moteur facilite la rotation à des vitesses plus élevées que la vitesse de rotation maximale des outils, de telle sorte qu'en sortie du réducteur la vitesse reste suffisante. La hauteur sur l'axe reste inférieure à celle d'un moteur universel ou asynchrone. De préférence, le moteur électrique selon l'invention est à commutation électronique, de manière à permettre un contrôle de la vitesse. Le réducteur peut comporter un ou plusieurs étages de réduction. Un réducteur comportant deux étages de réduction associés chacun avec un entraînement coaxial permet d'étendre la gamme de vitesse pouvant être utilisée par les outils, par exemple de l'ordre de 50 t/min pour un outil de type pétrin jusqu'à environ 1 500 t/min pour un outil prévu pour hacher le persil. Un entraînement direct peut également être prévu, notamment pour la réalisation demandant une vitesse de rotation élevée mais ne nécessitant pas un couple important. La motorisation proposée allie donc compacité et efficacité.

Avantageusement, le réducteur est logé au moins partiellement à l'intérieur d'un renfoncement ménagé dans une paroi du boîtier, le stator étant agencé autour de l'extérieur du renfoncement, et l'arbre traversant la paroi. Ainsi le stator et le rotor sont agencés d'un côté de la paroi du boîtier autour du renfoncement, et le réducteur est logé de l'autre côté de la paroi du boîtier.

Avantageusement alors, la partie annulaire magnétique est montée sur ladite paroi autour de l'extérieur du renfoncement. Cette disposition permet d'utiliser une paroi du boîtier comme enveloppe de la motorisation.

Avantageusement le renfoncement est fermé par un capot. Le capot ménage un passage pour le ou les entraînements issus du réducteur tout en maintenant en place le réducteur dans son logement.

Pour une meilleure fiabilité l'arbre tourne dans un palier monté dans la paroi.

Avantageusement encore, l'arbre s'étend de part et d'autre du rotor et tourne dans une autre paroi du boîtier agencée du côté du rotor opposé à la première paroi. L'utilisation de deux appuis de part et d'autre du rotor permet de réduire les hauteurs de guidage de l'arbre.

Alors, pour une meilleure fiabilité l'arbre tourne dans un autre palier monté dans l'autre paroi.

Selon l'invention le réducteur est de type épicycloïdal, ce type de réducteur étant particulièrement compact et efficace. Notamment, le réducteur permet de recentrer et d'équilibrer le rotor.

Avantageusement alors, le réducteur comporte un étage de réduction comprenant un pignon primaire, ménagé sur l'arbre, des planétaires primaires, de préférence au nombre de trois, montés sur un support principal coaxial à l'arbre, coopérant d'une part avec le pignon primaire et d'autre part avec un secteur annulaire denté appartenant au boîtier ou au stator, le support primaire présentant une extrémité libre formant un entraînement primaire. Ainsi l'entraînement primaire est coaxial à l'arbre du rotor. L'utilisation d'au moins trois planétaires primaires permet de maintenir le support principal sur son axe de rotation.

Avantageusement alors, l'arbre traverse le support principal et comporte une extrémité libre formant un entraînement direct. La disposition du réducteur entre l'entraînement direct et le rotor permet un meilleur équilibrage du rotor. Toutefois un entraînement direct formé sur l'extrémité libre opposée peut aussi être envisagé.

Avantageusement encore, le réducteur comporte un deuxième étage de réduction comprenant un pignon secondaire, agencé axialement sur le support, des planétaires secondaires, de préférence au nombre de trois, montés sur un support secondaire coaxial à l'arbre, coopérant d'une part avec le pignon secondaire et d'autre part avec un second secteur annulaire denté appartenant au boîtier ou au stator, le support secondaire présentant une extrémité libre formant un entraînement secondaire, l'extrémité libre du support principal étant agencée dans une ouverture de l'extrémité libre du support secondaire. L'entraînement primaire et l'entraînement secondaires sont coaxiaux, avec deux rapports de réductions différents. L'utilisation d'au moins trois planétaires secondaires permet de maintenir le support secondaire sur son axe de rotation.

Avantageusement le matériau de la paroi est élastiquement moins rigide que le matériau du pignon primaire et que le matériau des planétaires primaires. Cette disposition permet de réduire les bruits générés par la motorisation.

Avantageusement la partie annulaire magnétique est réalisée à partir de poudre de fer. Le caractère magnétique isotrope de la poudre de fer permet d'envisager des géométries de stator dont la réalisation à partir d'empilage de tôles magnétiques est très difficile et/ou présente un coût prohibitif.

Avantageusement alors, le stator et le rotor présentent un entrefer annulaire axial. Les noyaux du stator présentent un axe parallèle à l'arbre du rotor. Ces dispositions facilitent la mise en place des bobines et l'assemblage de la motorisation, qui peut se faire par empilage.

Avantageusement le rotor porte un aimant permanent multipolaire réalisé en plastoaimant. Cette matière présente une meilleure résilience que la matière des ferrites traditionnelles, dépourvue de liant et davantage sujette à la fissuration. Il en résulte un assemblage moins contraignant ainsi qu'une meilleure fiabilité en fonctionnement.

Avantageusement l'arbre est guidé en rotation par deux éléments de guidage montés respectivement dans la paroi et dans une autre paroi du boîtier, le rotor étant disposé entre la paroi et l'autre paroi. Les éléments de guidage peuvent être formés par exemple par des paliers, des coussinets ou encore des roulements.

Avantageusement alors l'un au moins des éléments de guidage présente un degré de liberté d'orientation. Les éléments de guidage peuvent alors être formés par exemple par des coussinets à rotule ou des roulements oscillants. Ces dispositions permettent d'offrir un degré de liberté d'inclinaison pour l'arbre du rotor, ce qui permet de rendre le montage moins précis et aussi d'obtenir une motorisation ayant une consommation à vide beaucoup plus faible. Avantageusement encore l'élément de guidage le plus éloigné du réducteur présente un degré de liberté d'orientation, pour mieux guider l'arbre. Avantageusement encore les deux éléments de guidage présentent un degré de liberté d'orientation. Cette disposition renforce encore les avantages précédents.

Avantageusement encore la hauteur entre les faces des éléments de guidage opposées au rotor est inférieure à 4 fois le diamètre de l'arbre, et de préférence inférieure à 3,5 fois le diamètre de l'arbre. De manière surprenante, malgré les vitesses élevées sur l'arbre, pouvant atteindre 10000 t/min, et les efforts fournis, le guidage est suffisant pour obtenir un fonctionnement satisfaisant. Cette disposition permet de réduire la hauteur de la motorisation. Une compacité remarquable peut ainsi être obtenue pour une motorisation présentant un usage polyvalent dans un appareil électroménager de préparation culinaire.

Avantageusement encore une rondelle ressort est montée entre l'autre paroi et le rotor. Cette disposition permet d'amortir les mouvements longitudinaux de l'arbre, ce qui améliore la rotation du rotor.

L'invention sera mieux comprise à l'étude d'un exemple de réalisation et d'une variante, pris à titre nullement limitatif, illustrés dans les figures annexées dans lesquelles :
- la figure 1 est une vue en coupe transversale d'un exemple de réalisation de la motorisation d'un appareil électroménager de préparation culinaire selon l'invention,
- la figure 2 est une vue éclatée de la motorisation montrée à la figure 1, dans laquelle les bobines ne sont pas représentées.
- la figure 3 est une vue de dessus du stator avec les bobines de la motorisation montrée à la figure 1,
- la figure 4 est une vue partielle en coupe transversale d'une variante de l'exemple de réalisation montré aux figures 1 à 3.

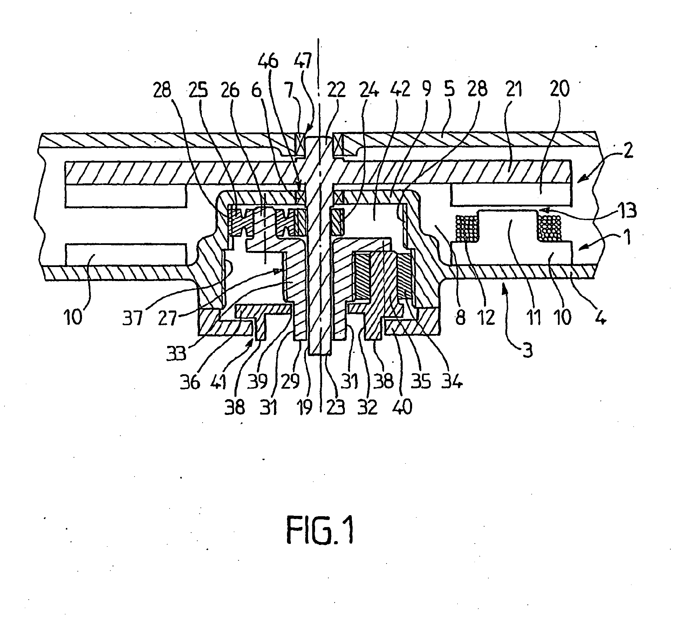

La figure 1 montre un moteur électrique pour appareil électroménager de préparation culinaire, comportant un stator 1 et un rotor 2.

Le stator 1 comprend une partie annulaire magnétique. 10 dégageant un espace central 8. La partie annulaire magnétique 10 peut notamment être réalisée à partir de poudre de fer. De préférence la poudre de fer est agglomérée par compactage selon la géométrie souhaitée. La partie annulaire magnétique 10 comporte autour de l'espace central 8 des noyaux 11 garnis de bobines 12. Les bobines 12 sont par exemple au nombre de neuf lorsque le moteur est piloté par une commande électronique triphasée. La partie annulaire magnétique 10 du stator 1 est montée sur une paroi 4 d'un boîtier 3.

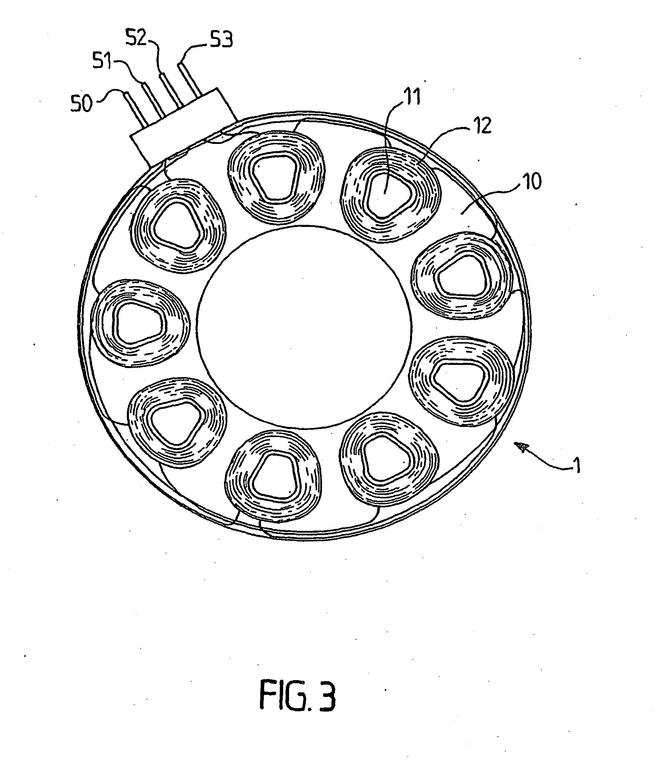

Dans l'exemple de réalisation illustré aux figures 1 à 3, le stator 1 comporte neuf bobines 12. Tel que montré à la figure 3, les bobines 12 sont associées par trois en série, chaque série de trois étant câblée en étoile. L'alimentation des trois phases 51, 52, 53 est pilotée électroniquement. Le neutre 50 peut servir pour le contrôle et/ou la mesure. Les bobines 12 comportent 160 tours de fil, le diamètre des fils étant de 0,425 mm. Tel que bien visible aux figures 1 et 3, les noyaux 11 sont dépourvus de champignon. Le stator 1 ne comporte pas de partie magnétique s'interposant entre les bobines 12 et le rotor 2.

Un isolant, non montré aux figures, peut être disposé entre les bobines 12 et la partie annulaire magnétique 10 du stator 1.

La partie annulaire magnétique 10 du stator présente un diamètre extérieur de 105 mm, un diamètre intérieur de 55 mm, et une épaisseur de base de 5 mm.

Les noyaux 11 présentent vus de dessus une géométrie trapézoïdale, les faces intérieures et extérieures étant raccordées aux faces latérales par des arrondis. Le rayon des arrondis est de préférence supérieur à 3 mm. Les faces extérieures sont plus grandes que les faces intérieures. Les faces latérales de deux noyaux 11 adjacents sont parallèles. La largeur diamétrale maximale radiale ou transversale des noyaux 11 est de 12 mm, et la hauteur est de 9,5 mm.

Le rotor 2 comprend un aimant permanent multipolaire 20 en forme d'anneau, monté sur un support 21 en forme de disque. L'aimant 20 pourrait également présenter une forme de disque du fait de la géométrie axiale de l'entrefer 13 entre le stator 1 et le rotor 2. L'aimant 20 est fixé au support 21 par tout moyen approprié, notamment par collage ou par surmoulage. L'aimant 20 peut notamment être réalisé en plastoaimant.

Dans l'exemple de réalisation illustré aux figures 1 à 3, le rotor 2 présente un diamètre extérieur de 105 mm correspondant à celui de l'aimant 20. Le diamètre intérieur de l'aimant 20 est de 54 mm. L'épaisseur du support 21 est de 4 mm. L'épaisseur de l'aimant 20 est de 5 mm. Le rotor 2 comporte trois paires de pôles magnétiques.

Le support 21 comporte un arbre 22 tournant dans la paroi 4 du boîtier 3. De préférence l'arbre 22 s'étend de part et d'autre du rotor 2 et tourne également dans une autre paroi 5 du boîtier 3. Tel que visible sur la figure 1, le rotor 2 est agencé entre la paroi 4 et l'autre paroi 5 du boîtier 3. Des paliers 6, 7 montés dans les parois 4, 5 du boîtier 3 facilitent la rotation de l'arbre 22. Les paliers 6, 7 forment des éléments 46, 47 de guidage en rotation et en translation de l'arbre 22.

Dans l'exemple de réalisation illustré aux figures 1 à 3, l'arbre 22 présente un diamètre de 6 mm au niveau des éléments de guidage 46, 47. La hauteur de l'assemblage entre la face de l'élément 46 opposée au rotor 2 et la face de l'élément 47 opposée au rotor 2 est de 16 mm. Le rapport de ces deux dimensions est inférieur à 3.

L'entrefer 13 entre le sommet des noyaux 11 et l'aimant 20 est axial. En d'autres termes, l'entrefer 13 s'étend selon une direction parallèle à l'axe de rotation de l'arbre 22 du rotor 2. La hauteur de l'entrefer est de 1 mm.

La hauteur de l'assemblage du stator 1 et du rotor 2 est de 23 mm. Le rapport entre la hauteur de l'assemblage du stator 1 et du rotor 2 d'une part et le plus grand des diamètres respectifs du stator 1 et du rotor 2 d'autre part est d'environ 4,5. Le diamètre de positionnement des noyaux 11 est de 80 mm.

La paroi 4 du boîtier 3 comporte un renfoncement 9 s'étendant dans l'espace central 8. La partie annulaire magnétique 10 est montée sur la paroi 4 autour de l'extérieur du renfoncement 9. L'arbre 22 traverse le renfoncement 9 pour entraîner un réducteur 30. A cet effet, l'arbre 22 porte un pignon primaire 24. Des planétaires primaires 25 montés chacun sur un moyeu 26 issu d'un support principal 27 coopèrent d'une part avec le pignon primaire 24 et d'autre part avec un secteur annulaire denté 28 appartenant au boîtier 3. Le support principal 27 présente une extrémité libre 29 formant un entraînement primaire 31 coaxial à l'arbre 22.

L'arbre 22 comporte une extrémité libre 23 traversant le support principal 27 et formant un entraînement direct 19 pour un outil de travail rotatif (non illustré aux figures). Le support principal 27 forme ainsi un arbre creux.

Un pignon secondaire 33 est agencé de manière axiale sur le support principal 27. Des planétaires secondaires 34 montés chacun sur un moyeu 35 issu d'un support secondaire 36 coopèrent d'une part avec le pignon secondaire 33 et d'autre part avec un second secteur annulaire denté 37 appartenant au boîtier 3. Le support secondaire 36 présente une extrémité fibre 38 formant un entraînement secondaire 32. L'extrémité libre 29 du support principal 27 est agencée dans une ouverture 39 de l'extrémité libre 38 du support secondaire 36. Ainsi l'entraînement primaire 31 est médian et l'entraînement secondaire 32 est périphérique.

Un capot 40 fixé au boîtier 3 permet de maintenir les éléments du réducteur 30 en place. Le capot 40 ferme le renfoncement 9 en laissant un passage 41 pour les entraînements 31, 32. Le capot 40 peut être démontable ou non. Le capot 40 forme avec le renfoncement 9 un logement 42 pour le réducteur 30. Du fait que l'extrémité 29 et l'extrémité 35 s'étendent par le passage 41 du capot 40, le réducteur 30 est logé partiellement dans le renfoncement 9. Toutefois, le réducteur pourrait être logé en totalité dans le renfoncement.

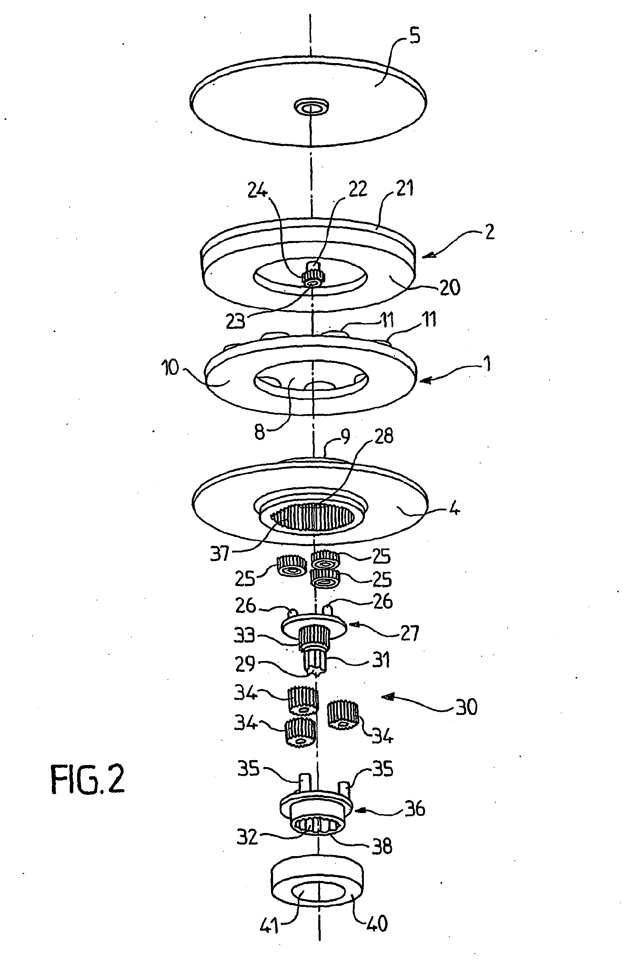

De préférence, tel que montré à la figure 2, les planétaires primaires 25 et les planétaires secondaires 34 sont au nombre de trois. Le rapport de réduction du premier étage est par exemple de 5 et le rapport de réduction du deuxième étage est par exemple de 4.

Les parois 4, 5 du boîtier 3 peuvent être réalisées en un matériau élastiquement moins rigide que le matériau des pignons et que le matériau des planétaires, pour limiter les vibrations. Par exemple, les parois 4, 5 du boîtier 3 peuvent être réalisées en polypropylène chargé fibre de verre, alors que les pignons et les planétaires peuvent être réalisés en polyamide chargé de fibres de verre et de PTFE.

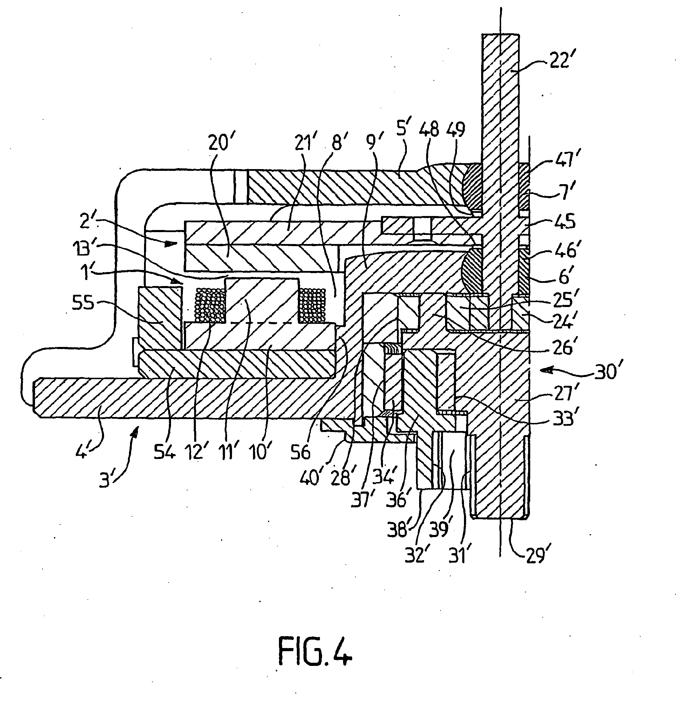

La variante de réalisation illustrée à la figure 4 diffère de l'exemple de réalisation précédent essentiellement par le montage de l'arbre 22' du rotor 2' ainsi que le montage de la partie annulaire magnétique 10' du stator 1'.

Le support 21' de l'aimant 20' est monté sur un plateau 45 issu de l'arbre 22'. L'arbre 22' est monté sur un élément 46' de guidage en rotation et en translation fixé à la paroi 4' du boîtier 3', et sur un élément 47' de guidage en rotation et en translation fixé à la paroi 5' du boîtier 3'.

Tel que montré à la figure 4, les éléments 46', 47' sont des coussinets 6', 7' montés sur rotule. Une rondelle 48 est interposée entre le coussinet 6' et le rotor 2'. A cet effet le coussinet 6' dépasse légèrement de la paroi 4'. Une rondelle ressort 49 est interposée entre le coussinet 7' et le rotor 2'. A cet effet le coussinet 7' dépasse légèrement de la paroi 5'.

A titre de variante, l'un et/ou l'autre de ces coussinets pourrait être fixe, de préférence le coussinet disposé du côté du stator 1'. Un épaulement prenant appui sur la paroi 4' est alors préférable pour ledit coussinet. L'un et/ou l'autre de ces coussinets pourrait aussi être remplacé par un roulement, de préférence par un roulement oscillant. Les coussinets montés sur rotule et les roulements oscillants permettent d'offrir un degré de liberté d'inclinaison pour l'arbre 22', ce qui permet d'utiliser une précision de montage moindre, mais aussi d'obtenir une motorisation ayant une consommation à vide beaucoup plus faible. La hauteur de l'assemblage entre la face de l'élément 46' opposée au rotor 2' et la face supérieure de l'élément 47' opposée au rotor 2' est de 20 mm. Le diamètre de l'arbre 22' étant de 6 mm, le rapport de ces deux dimensions est inférieur à 3,5.

L'entrefer 13' entre la face supérieure des noyaux 11' portant les bobines 12' et l'aimant 20' est de l'ordre de 1 mm. Le réducteur 30' entraîné par l'arbre 22' est agencé partiellement dans l'espace central 8' entouré par les noyaux 11'. Le réducteur 30' est logé partiellement à l'intérieur du renfoncement 9' ménagé dans la paroi 4'. Le réducteur 30' ne présente pas d'entraînement direct.

La partie annulaire magnétique 10' du stator 1' montée sur la paroi 4' repose sur une cale 54. La partie annulaire magnétique 10' est montée autour de l'extérieur du renfoncement 9'. La partie annulaire magnétique 10' est maintenue latéralement par une paroi 56 du renfoncement 9'. La partie annulaire magnétique 10' est maintenue par l'intermédiaire d'une bride 55 retenue par la paroi 5'. Les parois 4',5' sont par exemple assemblées au moyen de vis, non montrées aux figures. Le capot 40' ferme le renfoncement 9'.

La motorisation avec réducteur intégrée ainsi proposée présente une consommation à vide très faible, pouvant être inférieure à 10 W. La consommation en charge est également peu élevée, même sous des charges importantes telles que le pétrissage d'un kilo de pâte, où elle peut rester inférieure à 150 W. Le moteur obtenu présente une compacité remarquable pour un usage polyvalent s'étendant sur une large gamme de vitesse et de couples. Le moteur obtenu présente de plus une endurance très supérieure à celle des moteurs universels utilisés habituellement dans les appareils ménagers, pour une consommation moindre. Le moteur sans réducteur présente une consommation à vide inférieure à 20 W. La présence du réducteur permet de stabiliser l'arbre, en ramenant l'inertie au centre de l'arbre.

Le réducteur 30, 30' décrit est de type épicycloïdal à deux étages de réduction.

Toutefois un réducteur à plusieurs étages peut également être envisagé. Un réducteur à deux étages et à deux entraînements présente toutefois l'avantage d'associer une gamme de vitesses étendue à un encombrement limité. Les secteurs dentés ménagés sur le boîtier peuvent également être envisagés sur le stator, notamment sur la partie magnétique.

Le deuxième étage de réduction présente un rapport de réduction de 20. Le deuxième étage de réduction permet d'obtenir des vitesses comprises entre 50 et 600 t/min avec un couple de 10 à 20 N/m, par exemple pour pétrir de la pâte, râper ou émincer des carottes ou du fromage, ou encore réaliser des préparations hachées à base de viande.

Le premier étage de réduction présente un rapport de réduction de 5. Le premier étage de réduction permet d'obtenir des vitesses jusqu'à 2000 t/min avec un couple de 2,5 à 5 N/m, par exemple pour hacher du persil.

Un entraînement direct peut être prévu dans le réducteur 30'. Par ailleurs, un entraînement direct peut être ménagé sur l'autre extrémité libre de l'arbre 22, 22' opposée au réducteur 30, 30', en complément ou en remplacement de l'entraînement direct 19. L'entraînement direct 19 peut également être supprimé.

Avec un entraînement direct, l'outil peut tourner à des vitesses de l'ordre de 8000 t/min avec un couple de 0,5 à 1 N/m pour réaliser des préparations liquides habituellement réalisées dans un appareil de type blender. Usuellement de tels appareils comportent des moteurs universels dont la vitesse à vide est supérieure à 12000 t/min. Toutefois la vitesse chute dès lors que l'appareil contient une préparation. De ce fait la vitesse en charge dans de tels appareils atteint très rarement 8000 t/min. Avec la motorisation proposée, le couple disponible sur une large plage de vitesse permet de réaliser des préparations directement à partir de fruits ou de légumes sans qu'il soit nécessaire de rajouter de l'eau.

Dans les exemples de réalisation proposés, le stator 1, 1' et le rotor 2, 2' présentent un entrefer annulaire de géométrie axiale, les axes des bobines 12, 12' étant parallèles à l'arbre 22, 22' du rotor 2, 2'. D'autres géométries sont toutefois envisageables, notamment un entrefer annulaire radial avec un rotor en forme de cloche et un stator dans lequel les bobines sont agencées selon des axes s'étendant dans une direction radiale par rapport à l'axe de rotation du rotor.

Le moteur électrique décrit dans les exemples de réalisation proposés peut être un moteur à commutation électronique, ou un moteur synchrone. Toutefois un moteur dans lequel le rotor est dépourvu d'aimant permanent multipolaire, notamment un moteur à réluctance variable, est également envisageable.

Egalement à titre de variante, la géométrie et/ou les dimensions du stator, la géométrie et/ou les dimensions du rotor, le nombre de bobines et/ou leur câblage peuvent être modifiés sans sortir du cadre de l'invention. Notamment, la partie annulaire magnétique 10, 10' du stator 1, 1' peut avantageusement présenter un diamètre extérieur compris entre 80 et 150 mm, un diamètre intérieur compris entre 40 et 80 mm, et une épaisseur sur la base reliant les noyaux comprise entre 3 et 7 mm. La section des noyaux 11, 11' peut présenter une géométrie différente, par exemple circulaire. La largeur diamétrale maximale de chaque noyau est avantageusement comprise entre 10 et 15 mm. La hauteur de chaque noyau est avantageusement comprise entre 5 et 12 mm. Le diamètre de positionnement des noyaux est avantageusement compris entre 50 et 100 mm. Le rotor 2, 2' peut avantageusement présenter un diamètre compris entre 80 et 150 mm. L'épaisseur du support 21, 21' est avantageusement comprise entre 3 et 5 mm. L'épaisseur de l'aimant 20, 20' est avantageusement comprise entre 3 et 7 mm.

L'aimant 20, 20' peut présenter des stries, par exemple des stries radiales.

La présente invention n'est nullement limitée à l'exemple de réalisation décrit et à ses variantes, mais englobe de nombreuses modifications dans le cadre des revendications.

La présente invention trouve une application dans le domaine des appareils électroménagers de préparation culinaire.

## Revendications

1. Moteur électrique pour appareil électroménager de préparation culinaire, comportant un stator (1 ; 1') fixé à un boîtier (3 ; 3') de l'appareil, le stator comprenant une partie annulaire magnétique (10; 10') présentant des noyaux (11 ; 11') garnis de bobines (12 ; 12') agencés autour d'un espace central (8 ; 8'), et un rotor (2 ; 2') monté sur un arbre (22 ; 22') traversant une paroi (4, 4') du boîtier (3, 3'), **caractérisé en ce qu'**un réducteur (30 ; 30') de type épicycloïdal entraîné par l'arbre (22 ; 22') est agencé au moins partiellement dans l'espace central (8 ; 8') à l'intérieur d'un renfoncement (9 ; 9') ménagé dans la paroi (4 ; 4') du boîtier (3 ; 3'), le stator (2 ; 2') étant agencé autour de l'extérieur du renfoncement (9 ; 9'), le réducteur (30 ; 30') comportant un étage de réduction comprenant un pignon primaire (24 ; 24'), ménagé sur l'arbre (22 ; 22'), des planétaires primaires (25 ; 25'), de préférence au nombre de trois, montés sur un support principal (27 ; 27') coaxial à l'arbre (22 ; 22'), coopérant d'une part avec le pignon primaire (24 ; 24') et d'autre part avec un secteur annulaire denté (28 ; 28') appartenant au boîtier (3 ; 3') ou au stator, le support principal (27 ; 27') présentant une extrémité libre (29 ; 29') formant un entraînement primaire (31 ; 31'), le réducteur (30; 30') comportant un deuxième étage de réduction comprenant un pignon secondaire (33 ; 33'), agencé axialement sur le support principal (27; 27'), des planétaires secondaires (34 ; 34'), de préférence au nombre de trois, montés sur un support secondaire (36 ; 36') coaxial à l'arbre (22 ; 22'), coopérant d'une part avec le pignon secondaire (33 ; 33') et d'autre part avec un second secteur annulaire denté (37 ; 37') appartenant au boîtier (3 ; 3') ou au stator, le support secondaire (36 ; 36') présentant une extrémité libre (38 ; 38') formant un entraînement secondaire (32 ; 32'), l'extrémité libre (29 ; 29') du support principal (27 ; 27') étant agencée dans une ouverture (39 ; 39') de l'extrémité libre (38 ; 38') du support secondaire (36 ; 36').

2. Moteur électrique selon la revendication 1, **caractérisé en ce que** la partie annulaire magnétique (10 ; 10') est montée sur la paroi (4 ; 4') autour de l'extérieur du renfoncement (9 ; 9').

3. Moteur électrique selon l'une des revendications 1 ou 2, **caractérisé en ce que** le renfoncement (9 ; 9') est fermé par un capot (40 ; 40').

4. Moteur électrique selon l'une des revendications 1 à 3, **caractérisé en ce que** l'arbre (22) traverse le support principal (27) et comporte une extrémité libre (23) formant un entraînement direct (19).

5. Moteur électrique selon l'une des revendications 1 à 4, **caractérisé en ce que** le matériau de la paroi (4 ; 4') est élastiquement moins rigide que le matériau du pignon primaire (24 ; 24') et que le matériau des planétaires primaires (25 ; 25').

6. Moteur électrique selon l'une des revendications 1 à 5, **caractérisé en ce que** la partie annulaire magnétique (10 ; 10') est réalisée à partir de poudre de fer.

7. Moteur électrique selon l'une des revendications 1 à 6, **caractérisé en ce que** le stator (1 ; 1') et le rotor (2 ; 2') présentent un entrefer annulaire axial.

8. Moteur électrique selon l'une des revendications 1 à 7, **caractérisé en ce que** le rotor (2 ; 2') porte un aimant permanent multipolaire (20 ; 20') réalisé en plastoalmant.

9. Moteur électrique selon l'une des revendications 1 à 8, **caractérisé en ce que** l'arbre (22) tourne dans un palier (6) monté dans la paroi (4).

10. Moteur électrique selon l'une des revendications 1 à 9, **caractérisé en ce que** l'arbre (22 ; 22') s'étend de part et d'autre du rotor (2 ; 2') et tourne dans une autre paroi (5 ; 5') du boîtier (3 ; 3'), agencée du côté du rotor (2 ; 2') opposé à la paroi (4 ; 4').

11. Moteur électrique selon l'une des revendications 1 à 9, **caractérisé en ce que** l'arbre (22 ; 22') s'étend de part et d'autre du rotor (2 ; 2') et tourne dans un autre palier (7 ; 7') monté dans une autre paroi (5 ; 5') du boîtier (3 ; 3'), agencée du côté du rotor (2 ; 2') opposé à la paroi (4 ; 4').

12. Moteur électrique selon l'une des revendications 1 à 9, **caractérisé en ce que** l'arbre (22 ; 22') est guidé en rotation par deux éléments de guidage (46, 47 ; 46', 47') montés respectivement dans la paroi (4 ; 4') et dans une autre paroi (5 ; 5') du boîtier (3 ; 3'), le rotor (2 ; 2') étant disposé entre la paroi (4 ; 4') et l'autre paroi (5 ; 5').

13. Moteur électrique selon la revendication 12, **caractérisé en ce que** l'un au moins des éléments de guidage (46', 47') présente un degré de liberté d'orientation.

14. Moteur électrique selon la revendication 13, **caractérisé en ce que** l'élément de guidage (46') le plus éloigné du réducteur (30') présente un degré de liberté d'orientation.

15. Moteur électrique selon la revendication 14, **caractérisé en ce que** les deux éléments de guidage (46', 47') présentent un degré de liberté d'orientation.

16. Moteur électrique selon la revendication 15, **caractérisé en ce que** la hauteur entre les faces des éléments de guidage (46, 47 ; 46', 47') opposées au rotor (2 ; 2') est inférieure à 4 fois le diamètre de l'arbre (22 ; 22'), et de préférence inférieure à 3,5 fois le diamètre de l'arbre (22 ; 22').

17. Moteur électrique selon l'une des revendications 10 à 16, **caractérisé en ce qu'**une rondelle ressort (49) est montée entre l'autre paroi (5') et le rotor (2').

## Claims

1. An electric motor for a food processor electrical household appliance, the motor comprising a stator (1; 1') being fastened to a housing (3; 3') of the appliance, and comprising a magnetic annular portion (10; 10') presenting cores (11; 11') fitted with coils (12; 12') arranged around a central space (8; 8'), and a rotor (2; 2') being mounted on a shaft (22; 22') passing through a wall (4, 4') of the housing (3, 3'), the motor being **characterized in that** an epicyclic type gearbox (30; 30') driven by the shaft (22; 22') is arranged at least in part in the central space (8; 8') inside a setback (9; 9') formed in the wall (4; 4') of the housing (3; 3'), the stator (2; 2') being arranged around the outside of the setback (9; 9'), the gearbox (30; 30') comprising a step-down stage comprising a primary gearwheel (24; 24'), mounted on the shaft (22; 22'), primary planet gears (25; 25'), preferably three in number, mounted on a main support (27; 27') coaxial about the shaft (22; 22') and co-operating firstly with the primary gear (24; 24') and secondly with a toothed annular sector (28; 28') forming part of the housing (3; 3') or of the stator, the main support (27; 27') presenting a free end (29; 29') forming a primary drive (31; 31'), the gearbox (30; 30') having a second step-down stage comprising a secondary gearwheel (33; 33') arranged axially on the main support (27; 27'), secondary planetary gears (34; 34'), preferably three in number, mounted on a secondary support (36; 36') coaxial about the shaft (22; 22') and co-operating firstly with the secondary gear (33; 33') and secondly with a second toothed annular sector (37; 37') belonging to the housing (3; 3') or to the stator, the secondary support (36; 36') presenting a free end (38; 38') forming a secondary drive (32; 32'), the free end (29; 29') of the main support (27; 27') being arranged in an opening (39; 39') of the free end (38; 38') of the secondary support (36; 36').

2. An electric motor according to claim 1, **characterized in that** the magnetic annular portion (10; 10') is mounted on the wall (4; 4') around the outside of the setback (9; 9').

3. An electric motor according to claim 1 or claim 2, **characterized in that** the setback (9; 9') is closed by a cover (40; 40').

4. An electric motor according to any one of claims 1 to 3, **characterized in that** the shaft (22) passes through the main support (27) and has a free end (23) forming a direct drive (19).

5. An electric motor according to any one of claims 1 to 4, **characterized in that** the material of the wall (4; 4') is elastically less stiff than the material of the primary gearwheel (24; 24') and than the material of the primary planet gears (25; 25').

6. An electric motor according to any one of claims 1 to 5, **characterized in that** the magnetic annular portion (10; 10') is made from iron powder.

7. An electric motor according to any one of claims 1 to 6, **characterized in that** the stator (1; 1') and the rotor (2; 2') present an axial annular airgap.

8. An electric motor according to any one of claims 1 to 7, **characterized in that** the rotor (2; 2') carries a multipole permanent magnet (20; 20') made of plasto-magnet.

9. An electric motor according to any one of claims 1 to 8, **characterized in that** the shaft (22) rotates in a bearing (6) mounted in the wall (4).

10. An electric motor according to any one of claims 1 to 9, **characterized in that** the shaft (22; 22') extends from either side of the rotor (2; 2') and rotates in another wall (5; 5') of the housing (3; 3'), arranged on the side of the rotor (2; 2') remote from the wall (4; 4').

11. An electric motor according to any one of claims 1 to 9, **characterized in that** the shaft (22; 22') extends from either side of the rotor (2; 2') and rotates in another bearing (7; 7') mounted in another wall (5; 5') of the housing (3; 3'), arranged on the side of the rotor (2; 2') remote from the wall (4; 4').

12. An electric motor according to any one of claims 1 to 9, **characterized in that** the shaft (22; 22') is guided in rotation by two guide elements (46, 47; 46', 47') mounted respectively in the wall (4; 4') and in another wall (5; 5') of the housing (3; 3'), the rotor (2; 2') being disposed between the wall (4; 4') and the other wall (5; 5').

13. An electric motor according to claim 12, **characterized in that** at least one of the guide elements (46', 47') presents a degree of freedom in swiveling.

14. An electric motor according to claim 13, **characterized in that** the guide element (46') further from the gearbox (30') presents a degree of freedom in swiveling.

15. An electric motor according to claim 14, **characterized in that** both guide elements (46', 47') present a degree of freedom in swiveling.

16. An electric motor according to claim 15, **characterized in that** the height between the faces of the guide elements (46, 47; 46', 47') remote from the rotor (2; 2') is less than 4 times the diameter of the shaft (22; 22'), and preferably less than 3.5 times the diameter of the shaft (22; 22').

17. An electric motor according to any one of claims 10 to 16, **characterized in that** a spring washer (49) is mounted between the other wall (5') and the rotor (2').

## Patentansprüche

1. Elektromotor für ein Elektrohaushaltsgerät zur Nahrungszubereitung, mit einem Stator (1; 1'), der an einem Gehäuse (3; 3') des Geräts befestigt ist, wobei der Stator einen magnetischen Ringteil (10; 10') umfasst, der mit Spulen (12; 12') versehene Kerne (11; 11') aufweist, welche um einen zentralen Raum (8; 8') angeordnet sind, und mit einem Rotor (2; 2'), der an einer durch eine Wand (4, 4') des Gehäuses (3, 3') hindurchgehenden Welle (22; 22') angebracht ist, **dadurch gekennzeichnet, dass** ein von der Welle (22; 22') angetriebenes Untersetzungsgetriebe (30; 30') vom Typ eines Planetengetriebes mindestens teilweise im zentralen Raum (8; 8') innerhalb einer in der Wand (4; 4') des Gehäuses (3; 3') ausgebildeten Vertiefung (9; 9') angeordnet ist, wobei der Stator (2; 2') um die Außenseite der Vertiefung (9; 9') herum angeordnet ist, wobei das Untersetzungsgetriebe (30; 30') eine Untersetzungsstufe mit einem an der Welle (22; 22') ausgebildeten primären Ritzel (24; 24') und vorzugsweise drei primären Planetenrädern (25; 25') aufweist, die an einem zur Welle (22; 22') koaxialen Hauptträger (27; 27') angebracht sind, einerseits mit dem primären Ritzel (24; 24') und andererseits mit einem ringförmigen Zahnsegment (28; 28') zusammenwirken, das dem Gehäuse (3; 3') oder dem Stator gehört, wobei der Hauptträger (27; 27') ein freies Ende (29: 29') aufweist, das einen Primärtrieb (31; 31') bildet, wobei das Untersetzungsgetriebe (30; 30) eine zweite Untersetzungsstufe mit einem am Hauptträger (27; 27') axial angebrachten sekundären Ritzel (33; 33') und vorzugsweise drei sekundären Planetenrädern (34; 34') aufweist, die an einem zur Welle (22; 22') koaxialen sekundären Träger (36; 36') angebracht sind, einerseits mit dem sekundären Ritzel (33; 33') und andererseits mit einem zweiten ringförmigen Zahnsegment (37; 37') zusammenwirken, das dem Gehäuse (3; 3') oder dem Stator gehört, wobei der sekundäre Träger (36; 36') ein freies Ende (38: 38') aufweist, das einen Sekundärtrieb (32; 32') bildet, wobei das freie Ende (29; 29') des Hauptträgers (27; 27') in einer Öffnung (39; 39') des freien Endes (38; 38') des sekundären Trägers (36; 36') angeordnet ist.

2. Elektromotor nach Anspruch 1, **dadurch gekennzeichnet, dass** der magnetische Ringteil (10; 10) an der Wand (4; 4') um die Außenseite der Vertiefung (9; 9') herum angebracht ist.

3. Elektromotor nach einem der Ansprüche 1 oder 2, **dadurch gekennzeichnet, dass** die Vertiefung (9; 9') durch eine Haube (40; 40') geschlossen ist.

4. Elektromotor nach einem der Ansprüche 1 bis 3, **dadurch gekennzeichnet, dass** die Welle (22) durch den Hauptträger (27) hindurchgeht und ein freies Ende (23) aufweist, das einen Direktantrieb (19) bildet.

5. Elektromotor nach einem der Ansprüche 1 bis 4, **dadurch gekennzeichnet, dass** das Material der Wand (4; 4') in seiner Elastizität weniger starr als das Material des primären Ritzels (24; 24') und als das Material der primären Planetenräder (25; 25') ist.

6. Elektromotor nach einem der Ansprüche 1 bis 5, **dadurch gekennzeichnet, dass** der magnetische Ringteil (10; 10') aus Eisenpulver besteht.

7. Elektromotor nach einem der Ansprüche 1 bis 6, **dadurch gekennzeichnet, dass** der Stator (1; 1') und der Rotor (2; 2') einen axialen ringförmigen Luftspalt aufweisen.

8. Elektromotor nach einem der Ansprüche 1 bis 7, **dadurch gekennzeichnet, dass** der Rotor (2; 2') einen mehrpoligen Dauermagnet (20; 20') trägt, der als Kunststoffmagnet ausgeführt ist.

9. Elektromotor nach einem der Ansprüche 1 bis 8, **dadurch gekennzeichnet, dass** sich die Welle (22) in einem in der Wand (4) angebrachten Lager (6) dreht.

10. Elektromotor nach einem der Ansprüche 1 bis 9, **dadurch gekennzeichnet, dass** sich die Welle (22; 22') auf der einen und anderen Seite des Rotors (2, 2') erstreckt und in einer weiteren Wand (5; 5') des Gehäuses (3; 3') dreht, die an der Seite des Rotors (2; 2') angeordnet ist, die der Wand (4; 4') gegenüberliegt.

11. Elektromotor nach einem der Ansprüche 1 bis 9, **dadurch gekennzeichnet, dass** sich die Welle (22; 22') auf der einen und anderen Seite des Rotors (2, 2') erstreckt und in einem weiteren Lager (7; 7') dreht, der in einer weiteren Wand (5; 5') des Gehäuses (3; 3') angebracht ist, die an der Seite des Rotors (2; 2') angeordnet ist, die der Wand (4; 4') gegenüberliegt.

12. Elektromotor nach einem der Ansprüche 1 bis 9, **dadurch gekennzeichnet, dass** die Welle (22; 22') durch zwei Führungselemente (46, 47; 46', 47') drehbar geführt ist, die jeweils in der Wand (4; 4') und in einer weiteren Wand (5; 5') des Gehäuses (3; 3') angebracht sind, wobei der Rotor (2; 2') zwischen der Wand (4; 4') und der weiteren Wand (5; 5') angeordnet ist.

13. Elektromotor nach Anspruch 12, **dadurch gekennzeichnet, dass** mindestens eines der Führungselemente (46'; 47') einen Orientierungs-Freiheitsgrad aufweist.

14. Elektromotor nach Anspruch 13, **dadurch gekennzeichnet, dass** das Führungselement (46'), das vom Untersetzungsgetriebe (30') am weitesten entfernt ist, Orientierungs-Freiheitsgrad aufweist.

15. Elektromotor nach Anspruch 14, **dadurch gekennzeichnet, dass** die beiden Führungselemente (46'; 47) einen Orientierungs-Freiheitsgrad aufweisen.

16. Elektromotor nach Anspruch 15, **dadurch gekennzeichnet, dass** die Höhe zwischen den Flächen der Führungselemente (46, 47; 46', 47'), die dem Rotor (2; 2') gegenüberliegen, geringer als der vierfache Durchmesser der Welle (22; 22') und vorzugsweise geringer als der 3,5-fache Durchmesser der Welle (22; 22') ist.

17. Elektromotor nach einem der Anspruch 10 bis 16, **dadurch gekennzeichnet, dass** ein Federring (49) zwischen der weiteren Wand (5') und dem Rotor (2') angebracht ist.
